# FASCICULE DE BREVET EUROPEEN

(11) **EP 3 157 836 B1**
(45) Date de publication et mention de la délivrance du brevet: **06.06.2018**
(21) Numéro de dépôt: 15745522.1
(22) Date de dépôt: 22.06.2015
(51) Int. Cl.: B65D 63/08

(54) **COLLIER DE SERRAGE A BOUCLE TRANSVERSALE**
BANDKLEMME MIT DURCHGANGSREIFEN
BAND CLAMP COMPRISING A THROUGH-HOOP

(30) Priorité: 23.06.2014 FR 1455794
(43) Date de publication de la demande: 26.04.2017
(73) Titulaire: Etablissements Caillau, 92130 Issy-les-Moulineaux (FR)
(72) Inventeur: PREVOT, Fabrice, F-41130 Selles sur Cher (FR); RIGOLLET, Nicolas, F-41200 Romorantin (FR); JACQUELIN, Arnaud, F-41230 Mur de Sologne (FR)
(74) Mandataire: Intès, Didier Gérard André
(86) Numéro de dépôt international: PCT/FR2015/051644
(87) Numéro de publication internationale: WO 2015/197959

(56) Documents cités:
- EP-A2- 1 775 220
- DE-U1- 20 104 180
- GB-A- 2 254 105
- US-B2- 7 373 695

## Description

La présente invention concerne un collier de serrage comprenant une bande métallique enroulée sur elle-même et une boucle transversale retenue à la première extrémité de la bande et formant, du côté externe de ladite première extrémité, un passage dans lequel la deuxième extrémité de la bande est insérée, la boucle ayant une partie interne qui est disposée contre la face interne de la première extrémité de la bande et dont un bord transversal de calage, tourné à l'opposé du bout libre de la première extrémité de la bande, coopère avec une arête transversale de calage de la première extrémité de la bande qui délimite un renfoncement de calage formé dans cette première extrémité.

Un collier de ce type est connu, par exemple par le brevet EP 1 775 220. Dans ce collier connu, la boucle présente deux ouvertures en registre sur ses faces interne et externe, et la première extrémité de la bande présente également une ouverture qui est en registre avec les ouvertures de la boucle. Pour serrer le collier autour d'un objet, on enroule la bande autour de l'objet, on insère la deuxième extrémité de la bande dans le passage de la boucle, on exerce une traction sur la deuxième extrémité de manière à réduire le diamètre du collier, et on emboutit la zone de la deuxième extrémité de la bande qui se trouve en registre avec les ouvertures précitées. Le poinçon d'emboutissage passe à travers l'ouverture de la face externe de la boucle et repousse la matière de la deuxième extrémité de la bande à travers l'ouverture de la première extrémité de la bande et jusqu'à l'ouverture de la face interne de la boucle. Ainsi, l'embouti de la deuxième extrémité de la bande est retenu par les bords de ces ouvertures. La coopération de l'embouti est imprécise et, d'ailleurs, le brevet EP 1 775 220 propose diverses formes d'emboutis, dont certaines sont complexes et difficiles à obtenir, pour tenter de pallier cette imprécision. De plus, l'embouti coopère soit avec le bord de l'ouverture de la première extrémité de la bande, soit avec celui de l'ouverture de la face interne de la boucle, soit avec ces deux bords, s'ils sont parfaitement alignés, ces différents modes de coopération étant aléatoires.

Ainsi, les comportements à la traction des colliers réalisés selon ce brevet peuvent différer d'un collier à l'autre, les efforts de serrage s'exerçant, selon les cas, entre les deux extrémités de la bande ou entre la deuxième extrémité de la bande et la boucle, elle-même retenue à la première extrémité de la bande. Il en résulte un manque de prédictibilité sur le comportement du collier à la traction et un risque de dégradation du serrage, voire de rupture, non maitrisé.

On connait également, par le brevet US 7 373 695, un collier du type précité, dans lequel le serrage est plus précis. Pour cela, la première extrémité du collier passe sous la face interne de la boucle et à l'intérieur de la boucle, la portion de cette première extrémité située dans la boucle présente une ouverture en registre avec une ouverture de la boucle, cette ouverture de la boucle présente un bord replié vers l'extérieur de manière à pénétrer dans l'ouverture de la première extrémité de la bande, et la face externe de la bande est emboutie avec la portion de la deuxième extrémité engagée de la boucle, de manière à repousser cette portion dans l'ouverture de la première extrémité de la bande, contre le bord replié précité. On comprend que ce collier est d'une fabrication très complexe, nécessitant une grande précision. Par exemple, si le bord replié de l'ouverture de la face interne de la boucle est trop saillant radialement dans la boucle, il risque de gêner l'introduction de la deuxième extrémité dans la boucle et même de nuire à la qualité et à la précision de l'embouti. De plus, le fait que la première extrémité de la bande passe sous la face interne de la boucle occasionne une importante surépaisseur interne qui peut s'avérer néfaste, en particulier lorsque l'objet serré à l'aide du collier est un tuyau qui doit être serré de manière homogène sur toute sa circonférence.

L'invention se propose de remédier au moins en partie à ces inconvénients de l'état de la technique.

Ce but est atteint grâce au fait que la deuxième extrémité de la bande présente une arête transversale de retenue reçue dans le renfoncement de calage et coopérant en butée avec un bord de retenue de ce renfoncement de calage pour retenir la deuxième extrémité de la bande contre un déplacement dans le sens d'une augmentation du diamètre du collier.

Ainsi, la fabrication du collier est simple puisque l'on met à profit la présence du renforcement de calage qui sert au calage de la boucle par rapport à la première extrémité du collier pour, à l'état serré du collier, retenir la deuxième extrémité de la bande contre un déplacement dans le sens d'une augmentation de diamètre. En effet, l'arête de retenue est reçue dans le renfoncement de calage en étant correctement positionnée par rapport à lui, et c'est avec un bord de ce renfoncement que coopère cette arête pour réaliser la retenue précitée. Par ailleurs, l'arête de retenue coopère, non pas avec un bord de la plaquette, mais avec le bord de retenue qui est directement formé dans la première extrémité de la bande. En d'autres termes, on réalise une retenue "bande sur bande" qui n'exerce pas de contrainte sur la plaquette. La qualité du serrage est ainsi optimisée.

Selon une option, le bord transversal de calage est un bord libre situé sur une première extrémité libre de la partie interne de la boucle.

Dans ce cas, la fabrication de la boucle est simplifiée puisque, contrairement à l'art antérieur précité, il n'est pas nécessaire de réaliser un perçage central dans cette boucle pour opérer son calage par rapport à la première extrémité de la bande.

Par exemple, le bord transversal de calage est formé au fond d'une encoche de la première extrémité libre de la partie interne de la boucle.

Ainsi, le renfoncement de calage peut être logé dans cette encoche. Vu de l'intérieur de la bande, le fond du renfoncement peut ainsi être situé sur le même rayon que la face interne de la boucle, de part et d'autre de l'encoche. La profondeur du renfoncement peut décroître en s'éloignant de la boucle, de manière à éviter un ressaut brutal sur la face interne de la bande, ceci pouvant garantir une meilleure étanchéité du serrage du collier lorsqu'il est serré sur un objet dans lequel un fluide est convoyé, par exemple lorsqu'il est serré sur un tuyau emmanché sur un manchon.

Selon une option, l'arête transversale de retenue délimite un renfoncement de retenue formé dans la deuxième extrémité de la bande.

Dans la zone du renfoncement de retenue, l'intérieur de la bande est écrouie, ce qui donne une bonne résistance mécanique à ce renfoncement et à l'arête de retenue, favorisant ainsi la qualité du serrage.

On peut prévoir que le renfoncement de retenue soit délimité par une découpe transversale et que l'arête de retenue soit formée sur la lèvre de ladite découpe qui est située au fond du renfoncement de retenue.

En d'autres termes, le renfoncement de retenue est formé par un crevé, dont la lèvre formant l'arête de découpe coopère en retenue avec le bord de retenue du renfoncement de calage. La précision du positionnement de l'arête de retenue est ainsi extrêmement grande, de même que sa géométrie, puisqu'elle est obtenue par une découpe plutôt que par un pliage, de sorte que les considérations telles que l'épaisseur de la bande ou la précision de son pliage n'interviennent pas dans la précision du positionnement.

Selon une option, le renfoncement de calage forme une cuvette dont un côté présente l'arête de calage sur sa face externe au renfoncement et présente le bord de retenue sur sa face interne au renfoncement.

Dans ce cas, le bord de retenue est situé dans une zone dans laquelle la matière de la bande est très fortement écrouie, et qui a donc une très forte résistance mécanique à la traction. Le collier peut donc être serré avec une tension de serrage très importante.

Selon une autre option, le renfoncement de calage est délimité par une découpe transversale et l'arête de calage est formée sur la lèvre de ladite découpe qui est située au fond du renfoncement de calage, tandis que le bord de retenue est formé sur la lèvre opposée.

Dans ce cas, la précision du positionnement relatif du bord de retenue de l'arête de retenue est importante, ce qui permet un serrage de précision.

Selon une option, la partie interne de la boucle présente un bord transversal de calage supplémentaire, tourné du côté du bout libre de la première extrémité de la bande et coopérant avec une arête transversale de calage supplémentaire de la première extrémité de la bande qui délimite un renfoncement de calage supplémentaire formé dans cette première extrémité.

On peut alors prévoir que le bord transversal de calage supplémentaire soit un bord libre situé sur la deuxième extrémité libre de la partie interne de la boucle.

Le bord transversal de calage supplémentaire peut être formé au fond d'une encoche de la deuxième extrémité libre de la partie interne de la boucle.

Le bord transversal de calage et le bord transversal de calage supplémentaire peuvent être formés de la même manière, symétriquement par rapport à une ligne transversale médiane de la partie interne de la boucle. Ces deux bords transversaux de calage peuvent être formés simultanément, par une même opération d'estampage, et avec une grande précision.

Selon une option, la boucle porte au moins une patte externe en saillie radiale, la patte présentant la forme d'un crochet ayant une tige portant une tête sous laquelle un dégagement est formé.

Comme on le verra dans la description détaillée, cette patte externe favorise le positionnement du collier par rapport à son outil de serrage.

On peut prévoir que le passage de la boucle dans lequel la deuxième extrémité de la bande est insérée comprenne un tronçon de contention délimité par au moins une portion de paroi externe de la boucle située au-dessus de la face externe de la première extrémité de la bande, et que la patte externe soit décalée longitudinalement par rapport à cette portion de paroi externe.

L'invention sera bien comprise et ses avantages apparaîtront mieux à la lecture de la description détaillée qui suit, d'un mode de réalisation représenté à titre d'exemples non limitatifs. La description se réfère aux dessins annexés, sur lesquels :
- la figure 1 est une vue en perspective d'un collier conforme à l'invention, avant son serrage ;
- la figure 2 est une vue partielle en perspective du même collier, après son serrage ;
- la figure 3 montre, en perspective, la face interne de la bande du collier des figures 1 et 2, au voisinage de la boucle transversale ;
- la figure 4 est une vue en coupe selon le plan IV-IV de la figure 2 ;
- la figure 5 est une vue analogue à celle de la figure 4, pour une variante de réalisation ;
- la figure 6 montre schématiquement, en vue de côté, la coopération du collier des figures précédentes avec son outil de serrage ; et
- la figure 7 est une vue en bout de la figure 6, selon la flèche VII.

Dans le présent texte, on qualifiera de "interne" un élément qui est situé vers le centre géométrique C du cercle défini par le collier, alors que l'on qualifiera de "externe" un élément situé du côté opposé à ce centre C. Par ailleurs, on qualifiera de "longitudinal" un élément dirigé selon la longueur de la bande c'est-à-dire, lorsque la bande est enroulée comme montré sur les figures, selon la direction d'enroulement. On qualifiera de "transversal" un élément orienté perpendiculairement à cette longueur, c'est-à-dire selon la largeur de la bande.

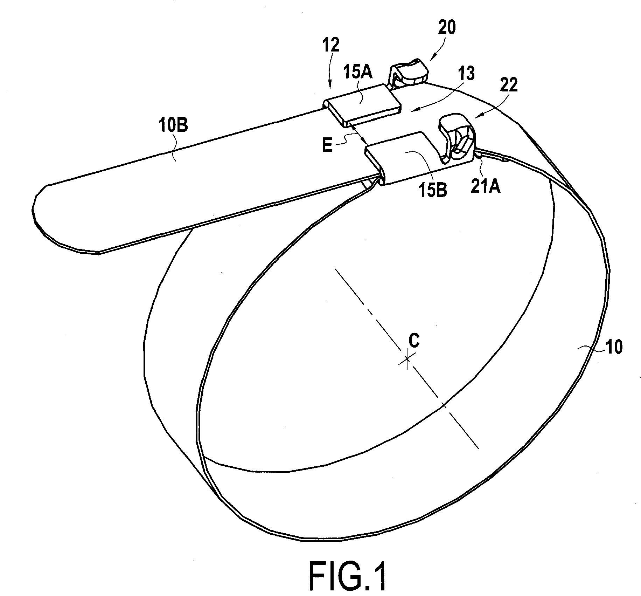

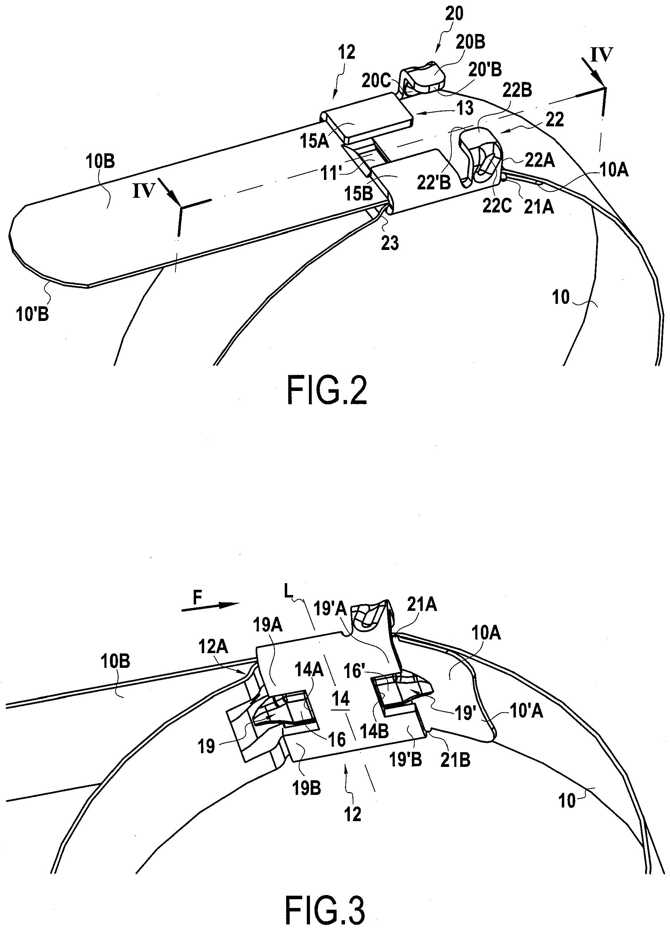

On décrit tout d'abord les figures 1 à 3, sur lesquelles on voit un collier de serrage comprenant une bande métallique 10 enroulée sur elle-même et une boucle transversale 12 retenue à la première extrémité 10A de la bande. Comme on le voit mieux sur les figures 1 et 2, la boucle 12 forme, du côté externe de la première extrémité 10A, un passage 13 dans lequel la deuxième extrémité 10B de la bande est insérée.

Au sens de la présente demande la "première extrémité" de la bande est tout le tronçon de la première extrémité qui coopère avec la boucle. De même la "deuxième extrémité" est tout le tronçon de la deuxième extrémité qui coopère avec la boucle.

Comme on le voit mieux sur la figure 3, la boucle 12 a une partie interne 14 disposée contre la face interne de la première extrémité 10A de la bande 10. Du côté externe, la boucle présente deux portions de paroi externe, respectivement 15A et 15B qui sont repliées, chacune, à partir d'un des bords longitudinaux de la partie interne 14. Ces portions de paroi externe forment des ailes qui sont situées au-dessus de la face externe de la première extrémité 10A de la bande 10. L'espace délimité radialement entre les faces internes de ces ailes repliées et la face externe de l'extrémité 10A de la bande forme un tronçon de contention du passage 13, dans lequel est passée la deuxième extrémité 10B de la bande. La notion de "tronçon de contention" signifie que la hauteur radiale de cet espace est juste suffisante pour permettre l'introduction de la deuxième extrémité 10B de la bande, qu'elle retient donc radialement vers l'extérieur.

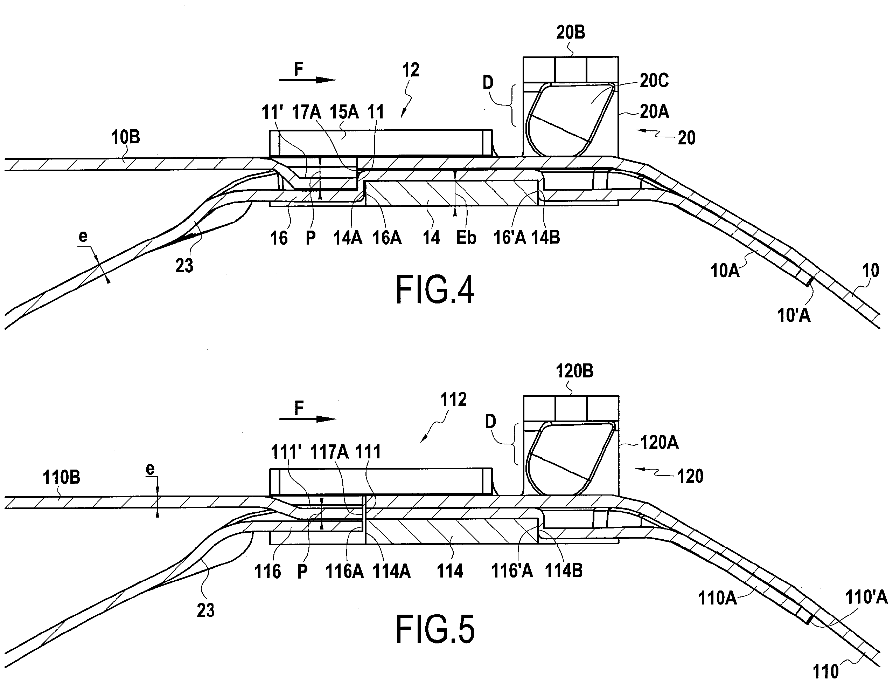

On voit, en particulier sur les figures 3 et 4, que la première extrémité 10A présente un renfoncement de calage 16 qui contribue au calage de la boucle par rapport à la première extrémité. En effet, comme on le voit mieux sur la figure 4, ce renfoncement de calage 16 présente une arête transversale de calage 16A qui coopère avec un bord transversal de calage 14A de la partie interne de la boucle 12. Dans l'exemple représenté, ce bord et cette arête sont rectilignes et orientés transversalement à la bande. Ainsi, la coopération entre l'arête 16A et le bord 14A empêche le déplacement de la première extrémité 10A de la bande dans le sens F (voir figure 4) par rapport à la boucle 12.

Pour une retenue dans l'autre sens, on utilise en l'occurrence des moyens analogues à ceux qui viennent d'être décrits. En effet, dans l'exemple représenté, la partie interne de la boucle présente un bord transversal de calage supplémentaire 14B qui est tourné du côté du bout libre 10A' de la première extrémité 10A de la bande et qui coopère avec une arête transversale de calage supplémentaire 16'A de la première extrémité de la bande. Cette arête transversale de calage supplémentaire délimite un renfoncement de calage supplémentaire 16' formé dans cette première extrémité.

Le bord transversal de calage supplémentaire 14B et le renfoncement de calage supplémentaire 16' sont globalement symétriques du bord transversal de calage 16A et du renfoncement de calage 16 par rapport à une ligne transversale médiane L de la partie interne de la boucle. La coopération entre l'arête 16'A et le bord 14B évite les déplacements de la première extrémité 10A de la bande par rapport à la boucle 12 dans le sens opposé au sens F indiqué sur la figure 4.

Comme on le voit mieux sur la figure 4, la deuxième extrémité 10B de la bande présente une arête transversale de retenue 11 qui est reçue dans le renfoncement de calage 16. Cette arête transversale de retenue coopère en butée avec un bord de retenue 17A du renfoncement de calage 16. On comprend que la coopération entre l'arête de retenue 11 et le bord de retenue 17A empêche les déplacements de la deuxième extrémité 10B de la bande par rapport à la première extrémité 10A dans le sens de la flèche F de la figure 4. En d'autres termes, une fois le collier serré, cette coopération empêche le desserrage du collier.

L'arête transversale de retenue 11 délimite un renfoncement de retenue 11' qui est formé dans la deuxième extrémité de la bande. Ce renfoncement de retenue 11' forme donc une saillie sur la face interne de la deuxième extrémité 10B de la bande et, comme on le voit sur la figure 4, le renfoncement de retenue est reçu dans le renfoncement de calage 16. On remarque, en s'intéressant en particulier à la figure 2, que les bords longitudinaux du renfoncement de retenue 11' forment des ressauts vers l'intérieur dans lesquels la matière est très écrouie. Il en va de même du bord transversal du renfoncement opposé à l'arête de retenue 11. De ce fait, toute la zone du renfoncement de retenue présente une résistance mécanique élevée. Ainsi, l'arête de retenue 11 peut supporter des efforts particulièrement élevés.

Le renfoncement de retenue 11' est délimité par une découpe transversale, l'arête de retenue 11 étant formée sur la lèvre de cette découpe qui est située au fond du renfoncement de retenue et qui est tournée du côté opposé au bout libre 10'B de la deuxième extrémité de la bande. Cette lèvre est rectiligne et orientée transversalement, et sa géométrie est particulièrement nette, de sorte que la retenue de la deuxième extrémité de la bande par rapport au bord transversal de calage s'effectue avec précision.

En l'occurrence, le renfoncement de calage 16 forme une cuvette dont un côté présente l'arête de calage 16A sur sa face externe au renfoncement 16 et présente le bord de retenue 17A sur sa face interne au renfoncement. Par exception aux notions de "interne" et "externe" définies précédemment, on définit ainsi les faces interne et externe de renfoncement par rapport au renfoncement en lui-même. En l'occurrence, le renfoncement formant une saillie sur la face interne de la première extrémité 10A du collier, la face externe au renfoncement est située du côté de la face interne de la première extrémité 10A, tandis que la face interne au renfoncement est située du côté de la face externe de cette première extrémité. Vu en coupe comme sur la figure 4, le côté du renfoncement 16 qui présente l'arête de calage 16A et le bord de retenue 17A sur ses deux faces opposées prend la forme d'un ressaut radial, sensiblement perpendiculaire à la face interne de la partie interne 14 de la boucle.

Comme on le voit mieux sur la figure 3, le bord transversal de calage 14A est un bord libre, situé sur la première extrémité libre 12A de la partie interne 14 de la boucle 12. Plus précisément, en l'occurrence, le bord transversal de calage 14A est formé au fond d'une encoche 19 de la première extrémité libre 12A précitée. De part et d'autre de l'encoche, on distingue des avancées longitudinales 19A et 19B. Le renfoncement de calage 16 est reçu dans l'encoche en étant bordé latéralement par les avancées 19A et 19B précitées. Comme on le voit sur la figure 3, la face interne du renfoncement 16 part, vers le fond de l'encoche, du niveau radial de la face interne de la partie interne 14 de la boucle et revient progressivement dans le plan de la bande en s'éloignant du fond de l'encoche 19 pour ne pas former de ressaut brutal sur la face interne de la bande.

On relève en revanche que la première extrémité de la bande située à l'extrémité libre 12A de la partie interne de la boucle 12 forme un ressaut 23 vers l'intérieur, de sorte que la face interne de la bande située du côté de ce ressaut opposé au bout libre 10'A de la bande est située sensiblement dans la continuité de la face interne de la boucle 12. En effet, la hauteur du ressaut, mesurée radialement, correspond sensiblement à l'épaisseur Eb de la partie interne 14 de la boucle.

Comme le bord transversal de calage 14A, le bord de calage transversal supplémentaire 14B est un bord libre de la boucle mais il est cette fois situé à la deuxième extrémité libre 12B de la partie interne 14 de la boucle opposée à sa première extrémité libre 12A. Ce bord de calage supplémentaire 14B est également formé au fond d'une encoche 19' de la deuxième extrémité libre 12B de la partie interne 14 de la boucle. Cette encoche est ainsi bordée par des avancées longitudinales 19'A et 19'B.

On remarque également que la première extrémité 10A de la bande présente, au niveau de la deuxième extrémité libre 12B de la partie interne 14 de la boucle, des saillies latérales 21A, 21B. Ces saillies sont réalisées par un poinçonnage partiel de la première extrémité de la bande qui fait localement fluer la matière transversalement vers l'extérieur. Elles forment en quelques sortes des "oreilles" latérales avec lesquelles coopère l'extrémité libre 12'B de la boucle et contribuent donc à retenir la première extrémité de la bande contre un déplacement dans le sens opposé à la flèche F par rapport à la boucle 12. Ainsi, dans l'exemple représenté, pour retenir la première extrémité de la bande par rapport à la boucle dans le sens opposé au sens de la flèche F, on utilise à la fois les saillies latérales 21A et 21B précitées, et l'arête transversale de calage supplémentaire 16'A coopérant avec le bord transversal de calage supplémentaire 14B.

Cela permet d'obtenir une résistance très élevée aux efforts exercés lors du serrage du collier. En effet, comme on l'a indiqué précédemment, une fois le collier serré, il est maintenu dans cet état par une coopération "bande sur bande" opérée directement entre l'arête transversale de retenue 11 de la deuxième extrémité de la bande et le bord de retenue 17A du renfoncement de calage formé à la première extrémité de la bande. Cependant, lors du serrage, pour exercer une traction sur la deuxième extrémité de la bande de manière à obtenir le diamètre minimum de serrage, l'outil de serrage peut prendre appui sur la boucle 12 de sorte qu'il est alors important que la boucle soit solidement retenue par rapport à la bande.

Bien entendu, on peut choisir cependant d'effectuer la retenue dans ce sens opposé au sens F uniquement à l'aide des saillies latérales 21A et 21B, ou bien uniquement à l'aide de la coopération entre l'arête transversale 16'A et le bord transversal 14B. On peut encore choisir un autre mode de retenue à la disposition de l'homme du métier.

La boucle 12 du collier 10 comporte deux pattes externes 20 et 22 qui sont en saillie radiale. Chacune de ces pattes présente la forme d'un crochet, avec une tige, respectivement 20A et 22A, et une tête, respectivement 20B et 22B, de sorte qu'un dégagement D est formé sous les têtes 20B et 22B. Ce dégagement forme un tronçon du passage 13, la deuxième extrémité 10B de la bande passant sous les têtes 20B et 22B des crochets. Cependant, comme indiqué précédemment, c'est le tronçon de contention de ce passage, formé sous les ailes repliées 15A et 15B, qui sert à retenir l'extrémité 10B de la bande contre un déplacement radial vers l'extérieur.

En l'espèce, les têtes ont des bords libres 20'B, 22'B qui s'étendent longitudinalement. Les tiges s'étendent en vis-à-vis, de part et d'autre de la boucle, en partant des bords longitudinaux de sa partie interne 14, la deuxième extrémité 10B de la bande passant entre elles pour accéder au tronçon de contention du passage 13.

Les pattes externes 20 et 22 sont décalées longitudinalement par rapport aux portions de parois externes 15A et 15B précitées. Par exemple, chaque aile de la boucle 12 dans lesquelles une portion de paroi externe 15A ou 15B est formée, peut initialement former un tout avec la patte 20 ou 22 ; une simple découpe transversale sépare la patte de la portion de paroi et cette dernière est repliée jusqu'à être parallèle à la portion interne 14 de la boucle 12, tandis que la patte est conformée en crochet.

Comme on le verra dans la suite, ces pattes servent à assurer un bon positionnement relatif du collier et de l'outil qui sert à le serrer.

Comme on le voit encore sur la figure 4, la profondeur P du renfoncement de calage 16, mesurée radialement à partir du plan de la face externe de la première extrémité de la bande de part et d'autre du renfoncement, est tout au plus sensiblement égale à l'épaisseur Eb de la partie interne 14 de la boucle. En fait, sur la figure 4, le renfoncement de calage est formé par la cuvette précitée. Ainsi, la profondeur de ce renfoncement est peu critique, pour autant qu'elle permette que la face interne du renfoncement ne soit pas en saillie interne par rapport à la face interne de la partie interne de la boucle 12.

Cette profondeur est plus critique dans la variante de la figure 5, qui est décrite maintenant et sur laquelle on utilise les mêmes références numériques que sur les figures précédentes, augmentées de 100. Sur la figure 5, le renfoncement de calage 116 est délimité par une découpe transversale. L'arête de calage 116A est formée sur la lèvre de cette découpe qui est située au fond du renfoncement 116 et qui est donc dirigée vers le bout libre 110'A de la première extrémité de la bande. La profondeur P du renfoncement 116 correspond à l'épaisseur e de la bande de telle sorte que, en venant se loger dans ce renfoncement de calage, la partie de la deuxième extrémité 110B de la bande dans laquelle est formé le renfoncement de retenue 111' vient dans le plan de la partie de la première extrémité 110A qui est située contre la face externe de la partie interne 114 de la boucle 112. En d'autres termes, dans ce cas, l'arête de retenue 111 est située en face de la lèvre 117A de la découpe qui délimite le renfoncement de calage 116, tournée du côté opposé au bout libre 110'A de la première extrémité de la bande. Cette lèvre 117A forme donc le bord de retenue.

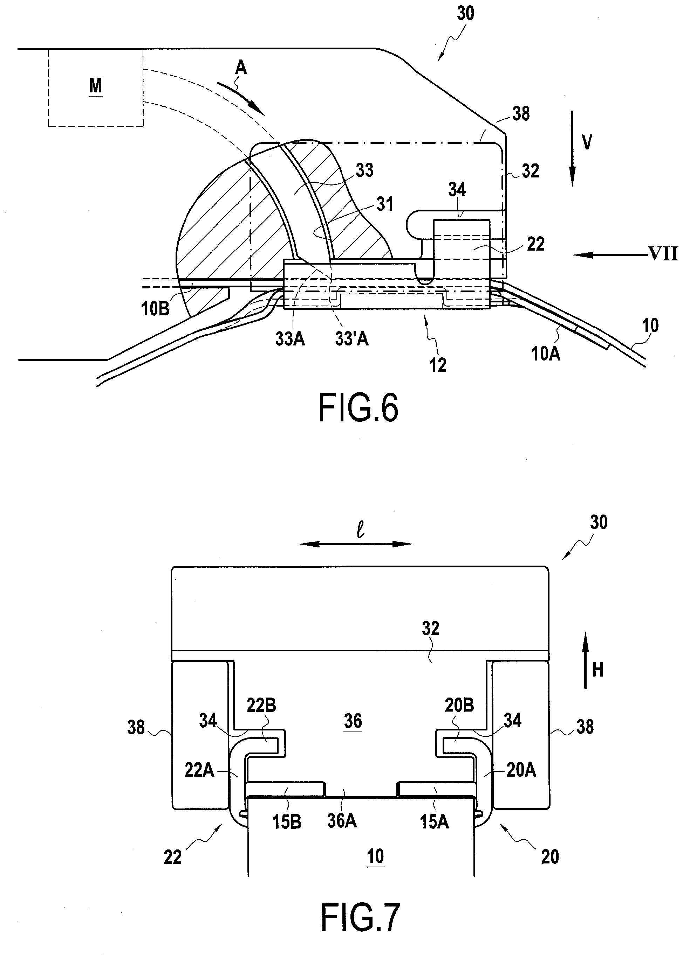

On décrit maintenant les figures 6 et 7 qui montrent la coopération du collier avec l'outil qui sert à le serrer.

Pour simplifier, seule la partie de tête active de l'outil est représentée. Pour plus de détails, on pourra par exemple se reporter au brevet français FR 2 542 388.

La partie de l'outil 30 représentée sur les figures 6 et 7 comprend sa tête 32 et son poinçon 33 qui, par un système d'actionnement M, est déplacé dans un canal 31 pour venir emboutir la deuxième extrémité 10B de la bande du collier et former l'arrête de retenue. Sur la figure 6, le poinçon 33 est représenté au moment où il touche la bande du collier, dans son déplacement de d'emboutissage selon la flèche A.

Le collier est serré par traction (par des moyens non représentés) sur cette deuxième extrémité, alors que la tête de l'outil prend appui sur la boucle 12. Une fois que le niveau de serrage souhaité est obtenu, le poinçon 33 est déplacé pour réaliser l'emboutissage. On relève que la tête 33A du poinçon 33 est biseautée et présente une pointe transversale de découpe 33'A. Elle réalise simultanément l'arrête de retenue 11 et le renfoncement de retenue 11'.

Comme indiqué précédemment, les pattes 20 et 22 servent au positionnement relatif de l'outil et du collier. Elles permettent de positionner la boucle dans un plan perpendiculaire en sens V d'emboutissage du poinçon.

Plus précisément, les pattes 20 et 22 sont au moins en partie insérées dans des renfoncements latéraux 34. Plus précisément, ce sont les têtes 20B et 22B des crochets formés par ces pattes, qui pénètrent dans ces renfoncements 34. La face interne de la tête du crochet peut donc coopérer avec la face du renfoncement 34 qui est située en regard, pour éviter un déplacement de l'outil par rapport au collier dans le sens de la flèche H indiquée sur la figure 7.

Par ailleurs, dans la mesure où deux pattes 20 et 22 sont présentes en étant respectivement situées sur chacun des deux bords longitudinaux de la boucle 12, c'est-à-dire de part et d'autre des bords longitudinaux du collier, une portion centrale 36 de la tête de l'outil située du côté interne (vers le centre du collier) par rapport aux renfoncements 34 se cale entre les tiges 20A et 22A des crochets formés par les pattes 20 et 22. Ceci permet donc d'éviter les débattements latéraux dans le sens I de l'outil par rapport au collier. On relève que la tête de l'outil peut avoir des joues 38 qui ferment les renfoncements 34 sur les côtés de cette tête, de sorte que les logements pour les pattes prennent la forme de fentes en forme de crochets. Ces joues 38 sont visibles sur la figure 7 et l'une d'elles est esquissée en trait mixte interrompu sur la figure 6.

Dans le collier qui vient d'être décrit, la boucle 12 est formée à partir d'un flanc métallique qui est découpé et plié de manière convenable. En l'occurrence, le "plan de joint" de ce flanc conformé en boucle est situé du côté extérieur du collier, entre les ailes repliées 15A et 15B. En l'espèce, les extrémités longitudinales (bords longitudinaux libres) de ces ailes sont espacées d'une largeur E. D'une part, ceci permet une économie de matière pour le matériau dans lequel la boucle est formée. D'autre part, comme on le voit sur la figure 7, ceci peut favoriser le calage de l'outil par rapport au collier. En effet, la portion centrale 36 de la tête 32 de l'outil peut ainsi présenter une nervure centrale 36A en saillie vers l'intérieur, qui se loge dans l'espace formé entre les extrémités libres des ailes 15A et 15B, pour pouvoir coopérer directement avec la deuxième extrémité 10B de la bande du collier. En revanche, les saillies latérales qui s'étendent de part et d'autre de la nervure centrale 36A, du côté interne des renfoncements 34, coopèrent directement avec les ailes repliées 15A et 15B.

En considérant à nouveau les pattes 20 et 22, on voit que chacune d'elles présente une nervure interne, respectivement 20C et 22C à la jonction entre sa tige et sa tête. L'épaisseur des nervures internes va en augmentant en se rapprochant de la tête. Il peut par exemple s'agir de goussets inclinés sensiblement à 45 degrés par rapport à la direction radiale, en saillie vers l'intérieur des pattes. Ainsi, les nervures délimitent entre elles, au voisinage de la tête des crochets, une largeur inférieure à la largeur de la deuxième extrémité 10B de la bande. Ceci permet d'éviter que le manipulateur ne pense avoir fermé le collier en introduisant seulement la deuxième extrémité entre les pattes 20 et 22. En effet, s'il tente de la faire, la forme des nervures internes précitées repoussera naturellement la deuxième extrémité vers l'intérieur (vers le centre C du collier) c'est-à-dire sous les ailes repliées 15A et 15B, dans le tronçon de confinement du passage 13.

## Revendications

1. Collier de serrage comprenant une bande métallique (10 ; 110) enroulée sur elle-même et une boucle transversale (12 ; 112) retenue à la première extrémité (10A ; 110A) de la bande et formant, du côté externe de ladite première extrémité, un passage (13) dans lequel la deuxième extrémité de la bande (10B ; 110B) est insérée, la boucle ayant une partie interne (14 ; 114) qui est disposée contre la face interne de la première extrémité (10A ; 110A) de la bande (10 ; 110) et dont un bord transversal de calage (14A ; 114A), tourné à l'opposé du bout libre (10'A ; 110'A) de la première extrémité de la bande, coopère avec une arête transversale de calage (16A ; 116A) de la première extrémité de la bande qui délimite un renfoncement de calage (16 ; 116) formé dans cette première extrémité (10A ; 110A),
**caractérisé en ce que** la deuxième extrémité (10B ; 110B) de la bande (10 ; 110) présente une arête transversale de retenue (11 ; 111) reçue dans le renfoncement de calage (16 ; 116) et coopérant en butée avec un bord de retenue (17A ; 117A) de ce renfoncement de calage (16 ; 116) pour retenir la deuxième extrémité de la bande contre un déplacement dans le sens d'une augmentation du diamètre du collier.

2. Collier selon la revendication 1, **caractérisé en ce que** le bord transversal de calage (14A ; 114A) est un bord libre situé sur une première extrémité libre (12A) de la partie interne (14 ; 114) de la boucle (12 ; 112).

3. Collier selon la revendication 2, **caractérisé en ce que** le bord transversal de calage (14A ; 114A) est formé au fond d'une encoche (19) de la première extrémité libre (12A) de la partie interne (14 ; 114) de la boucle (12 ; 112).

4. Collier selon l'une quelconque des revendications 1 à 3, **caractérisé en ce que** la profondeur (P) du renfoncement de calage (16 ; 116), mesurée radialement, est tout au plus sensiblement égale à l'épaisseur (e) de la bande (10 ; 110) ou à l'épaisseur (Eb) de la partie interne de la boucle (12 ; 112).

5. Collier selon l'une quelconque des revendications 1 à 4, **caractérisé en ce que** l'arête transversale de retenue (11 ; 111) délimite un renfoncement de retenue (11'; 111') formé dans la deuxième extrémité de la bande (10B ; 110B).

6. Collier selon la revendication 5, **caractérisé en ce que** le renfoncement de retenue (11'; 111') est délimité par une découpe transversale et **en ce que** l'arête de retenue (11 ; 111) est formée sur la lèvre de ladite découpe qui est située au fond du renfoncement de retenue.

7. Collier selon l'une quelconque des revendications 1 à 6, **caractérisé en ce que** le renfoncement de calage (16) forme une cuvette dont un côté présente l'arête de calage (16A) sur sa face externe au renfoncement et présente le bord de retenue (17A) sur sa face interne au renfoncement.

8. Collier selon l'une quelconque des revendications 1 à 6, **caractérisé en ce que** le renfoncement de calage (116) est délimité par une découpe transversale et **en ce que** l'arête de calage (116A) est formée sur la lèvre de ladite découpe qui est située au fond du renfoncement de calage, tandis que le bord de retenue (117A) est formé sur la lèvre opposée.

9. Collier selon l'une quelconque des revendications 1 à 8, **caractérisé en ce que** la partie interne (14 ; 114) de la boucle (12 ; 112) présente un bord transversal de calage supplémentaire (14B ; 114B), tourné du côté du bout libre (10A') de la première extrémité (10A) de la bande et coopérant avec une arête transversale de calage supplémentaire (16'A ; 116'A) de la première extrémité (10A ; 110A) de la bande qui délimite un renfoncement de calage supplémentaire (16') formé dans cette première extrémité (10A ; 110A).

10. Collier selon la revendication 9, **caractérisé en ce que** le bord transversal de calage supplémentaire (14B ; 114B) est un bord libre situé sur la deuxième extrémité libre (12B) de la partie interne (14 ; 114) de la boucle (12 ; 112).

11. Collier selon la revendication 10, **caractérisé en ce que** le bord transversal de calage supplémentaire (14B ; 114B) est formé au fond d'une encoche (19') de la deuxième extrémité libre (12B) de la partie interne (14 ; 114) de la boucle (12 ; 112).

12. Collier selon l'une quelconque des revendications 1 à 11, **caractérisé en ce que** la boucle (12 ; 112) porte au moins une patte externe (20, 22 ; 120) en saillie radiale, la patte présentant la forme d'un crochet ayant une tige (20A, 22A ; 120A) portant une tête (20B, 22B ; 120B) sous laquelle un dégagement (D) est formé.

13. Collier selon la revendication 12, **caractérisé en ce que** le passage (13) comprend un tronçon de contention délimité par au moins une portion de paroi externe (15A, 15B) de la boucle (12 ; 112) située au-dessus de la face externe de la première extrémité (10A ; 110A) de la bande (10 ; 110), et **en ce que** la patte externe (20, 22 ; 120) est décalée longitudinalement par rapport à cette portion de paroi externe.

## Patentansprüche

1. Rohrschelle, umfassend einen Metallstreifen (10; 110), der auf sich selbst gewickelt ist, und eine Querschlaufe (12; 112), die am ersten Ende (10A; 110A) des Streifens gehalten wird und auf der Außenseite des ersten Endes einen Durchgang (13) bildet, in den das zweite Ende des Streifens (10B; 110B) eingeführt wird, wobei die Schlaufe einen inneren Abschnitt (14; 114) aufweist, der an der Innenfläche des ersten Endes (10A; 110A) des Streifens (10; 110) angeordnet ist und dessen eine Querkante zum Verkeilen (14A; 114A), die vom freien Ende (10'A; 110'A) des ersten Endes des Streifens abgewandt ist, mit einer Querkante zum Verkeilen (16A 116A) des ersten Endes des Streifens, die eine in diesem ersten Ende (10A; 110A) gebildete Vertiefung zum Verkeilen (16; 116) begrenzt, zusammenwirkt,
**dadurch gekennzeichnet, dass** das zweite Ende (10B; 110B) des Streifens (10; 110) eine in der Vertiefung zum Verkeilen (16; 116) aufgenommene Querkante zum Halten (11; 111) aufweist, die im Anschlag mit einer Haltekante (17A; 117A) dieser Vertiefung zum Verkeilen (16; 116) zusammenwirkt, um das zweite Ende des Streifens gegen eine Verschiebung in Richtung einer Vergrößerung des Durchmessers der Schelle zurückzuhalten.

2. Schelle gemäß Anspruch 1, **dadurch gekennzeichnet, dass** die Querkante zum Verkeilen (14A; 114A) eine freie Kante ist, die sich an einem ersten freien Ende (12A) des inneren Abschnitts (14; 114) der Schlaufe (12; 112) befindet.

3. Schelle gemäß Anspruch 2, **dadurch gekennzeichnet, dass** die Querkante zum Verkeilen (14A; 114A) am Boden einer Kerbe (19) des ersten freien Endes (12A) des inneren Abschnitts (14; 114) der Schlaufe (12; 112) ausgebildet ist.

4. Schelle gemäß einem der Ansprüche 1 bis 3, **dadurch gekennzeichnet, dass** die Tiefe (P) der Vertiefung zum Verkeilen (16; 116), radial gemessen, höchstens im Wesentlichen gleich der Dicke (e) des Streifens (10; 110) oder der Dicke (Eb) des inneren Abschnitts der Schlaufe (12; 112) ist.

5. Schelle gemäß einem der Ansprüche 1 bis 4, **dadurch gekennzeichnet, dass** die Querkante zum Halten (11; 111) eine im zweiten Ende des Streifens (10B; 110B) ausgebildete Vertiefung zum Halten (11'; 111') begrenzt.

6. Schelle gemäß Anspruch 5, **dadurch gekennzeichnet, dass** die Vertiefung zum Halten (11'; 111') durch einen Querausschnitt begrenzt ist und dass die Kante zum Halten (11; 111) auf dem Rand des Ausschnitts ausgebildet ist, der sich am Boden der Vertiefung zum Halten befindet.

7. Schelle gemäß einem der Ansprüche 1 bis 6, **dadurch gekennzeichnet, dass** die Vertiefung zum Verkeilen (16) eine Mulde bildet, von der eine Seite die Kante zum Verkeilen (16A) an ihrer Außenseite an der Vertiefung aufweist und die Kante zum Halten (17A) an ihrer Innenseite an der Vertiefung aufweist.

8. Schelle gemäß einem der Ansprüche 1 bis 6, **dadurch gekennzeichnet, dass** die Vertiefung zum Verkeilen (116) durch einen Querausschnitt begrenzt ist und dass die Kante zum Verkeilen (116A) auf dem Rand des Ausschnitts ausgebildet ist, der sich am Boden der Vertiefung zum Verkeilen befindet, während die Kante zum Halten (117A) an dem gegenüberliegenden Rand ausgebildet ist.

9. Schelle gemäß einem der Ansprüche 1 bis 8, **dadurch gekennzeichnet, dass** der innere Abschnitt (14; 114) der Schlaufe (12; 112) eine zusätzliche Querkante zum Verkeilen (14B; 114B) aufweist, die der Seite des freien Endes (10A') des ersten Endes (10A) des Streifens zugewandt ist und mit einer zusätzlichen Querkante zum Verkeilen (16'A; 116'A) des ersten Endes (10A; 110A) des Streifens zusammenwirkt, die eine zusätzliche Vertiefung zum Verkeilen (16') begrenzt, die in diesem ersten Ende (10A; 110A) ausgebildet ist.

10. Schelle gemäß Anspruch 9, **dadurch gekennzeichnet, dass** die zusätzliche Querkante zum Verkeilen (14B; 114B) eine freie Kante ist, die sich an dem zweiten freien Ende (12B) des inneren Abschnitts (14; 114) der Schlaufe (12; 112) befindet.

11. Schelle gemäß Anspruch 10, **dadurch gekennzeichnet, dass** die zusätzliche Querkante zum Verkeilen (14B; 114B) an der Unterseite einer Kerbe (19') des zweiten freien Endes (12B) des inneren Abschnitts (14; 114) der Schlaufe (12; 112) ausgebildet ist.

12. Schelle gemäß einem der Ansprüche 1 bis 11, **dadurch gekennzeichnet, dass** die Schlaufe (12; 112) mindestens eine radial hervorstehende äußere Lasche (20, 22; 120) trägt, wobei die Lasche die Form eines Hakens mit einem Stab (20A, 22A; 120A) aufweist, der einen Kopf (20B, 22B; 120B) trägt, unter dem ein Freiraum (D) ausgebildet ist.

13. Schelle gemäß Anspruch 12, **dadurch gekennzeichnet, dass** der Durchgang (13) einen Rückhalteabschnitt umfasst, der durch mindestens einen äußeren Wandabschnitt (15A, 15B) der Schlaufe (12; 112) begrenzt ist, der oberhalb der Außenfläche des ersten Endes (10A; 110A) des Streifens (10; 110) angeordnet ist, und dass die äußere Lasche (20, 22; 120) gegenüber diesem äußeren Wandabschnitt in Längsrichtung versetzt ist.

## Claims

1. A clamping collar comprising a looped metal strap (10; 110), and a transverse buckle (12; 112) retained at the first end (10A; 110A) of the strap and forming, on the outer side of said first end, a passage (13) through which the second end of the strap (10B; 110B) is inserted, the buckle having an inner portion (14; 114) that is disposed against the inner face of the first end (10A; 110A) of the strap (10; 110) and that has a blocking transverse edge (14A; 114A) that faces in the opposite direction from the direction in which the free tip (10'A; 110'A) of the first end of the strap faces, and that co-operates with a blocking transverse stop (16A; 116A) of the first end of the strap that defines a blocking setback (16; 116) formed in said first end (10A; 110A);
said clamping collar being **characterized in that** the second end (10B; 110B) of the strap (10; 110) has a retaining transverse stop (11; 111) received in the blocking setback (16; 116) and co-operating in abutment with a retaining edge (17A; 117A) of said blocking setback (16; 116) to retain the second end of the strap to prevent it from moving in the direction in which the diameter of the collar increases.

2. A collar according to claim 1, **characterized in that** the blocking transverse edge (14A; 114A) is a free edge situated on a first free end (12A) of the inner portion (14; 114) of the buckle (12; 112).

3. A collar according to claim 2, **characterized in that** the blocking transverse edge (14A; 114A) is formed at the back of a notch (19) in the first free end (12A) of the inner portion (14; 114) of the buckle (12; 112).

4. A collar according to any one of claims 1 to 3, **characterized in that** the depth (P) of the blocking setback (16; 116), as measured radially, is at most substantially equal to the thickness (e) of the strap (10; 110) or to the thickness (Eb) of the inner portion of the buckle (12; 112).

5. A collar according to any one of claims 1 to 4, **characterized in that** the retaining transverse stop (11; 111) defines a retaining setback (11'; 111') formed in the second end of the strap (10B; 110B).

6. A collar according to claim 5, **characterized in that** the retaining setback (11'; 111') is defined by a transverse cutout and **in that** the retaining stop (11; 111) is formed on the lip of said cutout that is situated at the back of the retaining setback.

7. A collar according to any one of claims 1 to 6, **characterized in that** the blocking setback (16) forms a dish having one of its sides forming the blocking stop (16A) on its face outside the setback, and forming the retaining edge (17A) on its face inside the setback.

8. A collar according to any one of claims 1 to 6, **characterized in that** the blocking setback (116) is defined by a transverse cutout, and **in that** the blocking stop (116A) is formed on the lip of said cutout that is situated at the back of the blocking setback, while the retaining edge (117A) is formed on the opposite lip.

9. A collar according to any one of claims 1 to 8, **characterized in that** the inner portion (14; 114) of the buckle (12; 112) has an additional blocking transverse edge (14B; 114B) that faces towards the free tip (10A') of the first end (10A) of the strap and that co-operates with an additional blocking transverse stop (16'A; 116'A) of the first end (10A; 110A) of the strap that defines an additional blocking setback (16') formed in said first end (10A; 110A).

10. A collar according to claim 9, **characterized in that** the additional blocking transverse edge (14B; 114B) is a free edge situated on the second free end (12B) of the inner portion (14; 114) of the buckle (12; 112).

11. A collar according to claim 10, **characterized in that** the additional blocking transverse edge (14B; 114B) is formed at the back of a notch (19') in the second free end (12B) of the inner portion (14; 114) of the buckle (12; 112).

12. A collar according to any one of claims 1 to 11, **characterized in that** the buckle (12; 112) carries at least one radially projecting outer tab (20, 22; 120), the tab having the shape of a hook having a stem (20A, 22A; 120A) carrying a head (20B, 22B; 120B) under which a recess (D) is formed.

13. A collar according to claim 12, **characterized in that** the passage (13) includes a restraint segment defined by at least one outer wall portion (15A, 15B) of the buckle (12; 112) situated above the outer face of the first end (10A; 110A) of the strap (10; 110), and **in that** the outer tab (20, 22; 120) is offset longitudinally relative to said outer wall portion.
